# EUROPEAN PATENT APPLICATION

(11) **EP 4 585 526 A1**
(43) Date of publication of application: **16.07.2025**
(21) Application number: 24223545.5
(22) Date of filing: 27.12.2024
(51) Int. Cl.: B65B 11/00, B26D 7/10, B26F 3/12, B65B 21/24, B65B 35/40, B65B 61/10, B65G 47/08

(54) **A MACHINE FOR PACKAGING PRODUCTS IN BUNDLES**

(30) Priority: 15.01.2024 IT 202400000549
(71) Applicant: Colines S.P.A., 28100 Novara (IT)
(72) Inventor: PECCETTI, Francesco, I-28100 Novara (IT); PECCETTI, Eraldo, I-28100 Novara (IT)
(74) Representative: Long, Giorgio

(57) **Abstract**

The present invention relates to a machine for packaging products, e.g., bottles and other containers, in bundles.

In particular, the invention relates to an apparatus (1) for packaging products (P) in bundles (F), comprising a conveying system (2) for the products (P), crossing in the following order
- a separation station (3) for separating the products (P) into a sequence of groups (G),
- a wrapping station (4) for wrapping the groups (G) in sequence in a continuous tube of pretensioned extensible plastic film,
- a cutting station (5) for cutting the continuous tube of pretensioned extensible plastic film to form bundles (F) of said products (P) wrapped in said pretensioned extensible plastic film,
**characterized in** that the separation station (3) comprises a spacing member (6) for spacing out the products (P) to form said groups (G) and a stabilization member (7) for stabilizing the spacing between the groups (G) comprising at least a first gripper device (9a) and at least a second gripper device (9b), said gripper devices (9a, 9b) being configured to move and insert spacers (D) into the space formed by said spacing member (6) between two groups (G) of products (P).

## Description

### Technical field of the invention

The present invention relates to a machine for packaging products, e.g., bottles or other containers, in bundles.

### Background art

Machines that "pack" bundles inside extensible film are known and used, such as those described in patent EP 3414167, for example.

According to the prior art, product packaging involves creating a continuous tube of plastic film that wraps the products to be bundled, the cutting of which involves the selection of individual bundles.

In some cases, the geometry of the bundled elements has stability problems, as the film wrapped in the longitudinal direction after cutting is poor and therefore is not capable of containing the packaged product at the front. In fact, by feeding the products in a row or several continuous parallel rows, the cutting is carried out between one product and the next, which are however separated by a space that is too small to allow a partial extension of the film on the front and back sides of the bundle.

Such a problem can be solved by wrapping the products to be bundled in a heat-shrink film, thus adapted to partially close onto the minor sides (front and back) of the bundle, thus obtaining a better containment. However, this system is considerably more expensive, as it requires a film made of a particular material and of greater thickness, as well as a further heat treatment step downstream to obtain the heat shrinkage of the film.

EP 3414167 describes a system for packaging products in bundles where the products are fed to the packaging apparatus divided into groups, e.g., groups of six products placed side by side in pairs, already spaced apart from one another. By using a pretensioned extensible film, it is possible to partially reclose the film on the front and back sides. However, a problem linked to this system is that, during the processing in the packaging apparatus, the separation between the groups of products is reduced to the point, in some cases, of being eliminated. Therefore, by means of such a system it is not possible to ensure a geometrically stable packaging of the products in bundles.

Therefore, there is a need to develop a process and related apparatus that allow obtaining a bundle of products wrapped in a plastic film of lower thickness than that used for heat shrinking, but that at the same time has a stable geometry, i.e., capable of holding the bundled products along all the sides of the bundle.

### Summary of the invention

The problem set out above is solved by an apparatus and method as defined in the appended claims, the definitions of which form an integral part of the present description.

The present invention relates to:
1) an apparatus for packaging products in bundles, comprising a conveying system for the products, crossing in the following order
   - a separation station for separating the products into a sequence of groups,
   - a wrapping station for wrapping the groups in sequence in a continuous tube of pretensioned extensible plastic film,
   - a cutting station for cutting the continuous tube of pretensioned extensible plastic film to form bundles of said products wrapped in said pretensioned extensible plastic film,
   **characterized in that** the separation station comprises a spacing member for spacing out the products to form said groups and a stabilization member for stabilizing the spacing between the groups comprising at least a first gripper device and at least a second gripper device, said gripper devices being configured to move and insert spacers into the space formed by said spacing member between two groups of products;
2) an apparatus as in point 1, wherein the conveying system comprises a first section to feed the products to the separation station, a second section to feed the groups of products to the wrapping station, a third section to feed the groups of products wrapped in the continuous tube of film to the cutting station, a fourth section to move the individual bundles away from the cutting station, and a fifth section to remove the bundles from the apparatus, wherein between the second section and the third section, a stationary surface is placed at the wrapping station, where the movement of the groups of products occurs by pushing;
3) an apparatus as in point 2, wherein the first section and the second section of the conveying system consist of a continuous belt, moved at a first speed v1, the third, fourth and fifth sections consist of independent conveyor belts, wherein the third section is moved at a speed v2 greater than v1, the fourth section is moved at a speed v3 greater than v2, and the fifth section is moved at a speed v4 greater than or equal to v3, and wherein, preferably, the first section and the second section comprise a belt with a low friction index, whereas the third, fourth and fifth sections comprise a belt with a high friction index, having a greater friction index than the friction index of the first and second sections;
4) an apparatus as in any one of points 2 to 3, wherein the spacing member comprises a pair of starwheels, arranged on opposite sides of the first section of the conveying system and each acting in a discontinuous and coordinated manner on a row of products, wherein the starwheels comprise hollows of suitable shape and size to be coupled to the products and are moved in opposite directions, i.e., one clockwise and the other anticlockwise, so as to accompany the advancement of the products;
5) an apparatus as in any one of points 1 to 4, wherein the gripper devices are movable with alternating motion parallel to a longitudinal axis of the apparatus, i.e., along the advancement direction of the products;
6) an apparatus as in point 5, wherein each of the gripper devices comprises a vertical bar vertically movable along a guide from the top downwards and vice versa, the vertical bar comprising a lower end from which, along a direction transverse to the longitudinal axis, a horizontal extension extends at a right angle, in turn comprising, at the distal end thereof, a vertical extension extending downwards parallel to the vertical bar, wherein the gripper devices slide along straight lines above the side flanks of the conveying system and the horizontal extensions of the respective vertical arms extend in opposite directions, i.e., one to the left and the other to the right, over a length such that the respective vertical extensions are aligned along the longitudinal axis, in a substantially central position between the side flanks of the conveying system;
7) an apparatus as in any one of points 2 to 6, wherein a trap opening is arranged between the fourth section and the fifth section of the conveying system, below which trap opening an arched chute is placed, which leads into a manifold comprising a conveyor belt, so as to bring the spacers recovered for reuse back to the separation station;
8) an apparatus as in point 7, wherein the trap opening comprises a central opening, vertically aligned with the chute and flanked on both sides by a series of idle rollers which allow the sliding movement of the advancing bundles alternating with the spacers;
9) an apparatus as in any one of points 1 to 8, comprising, at the spacing member, a lifting device and a tunnel element, configured to lift and bring the spacers to a position of gripping by the gripper devices;
10) an apparatus as in point 9, wherein the lifting device comprises a plurality of plates configured to lift the spacers to the height of said tunnel element;
11) an apparatus as in point 10, wherein the plates are shaped like fingers and are configured to pick up the incoming spacers from the manifold and deposit them in a proximal end of the tunnel element by rotation about a pulley, so as to move from the horizontal position to the vertical position; and wherein the tunnel element comprises an actuator configured to push the spacer to a distal end of the tunnel element, at said position of gripping by the gripper devices;
12) an apparatus as in any one of points 2 to 11, wherein the gripper devices are configured to act with alternating motion so that, while one inserts a spacer and pushes a group of product towards the stationary surface, the other moves to the gripping position of a spacer from the tunnel element, and so on.

The invention also relates to a method for packaging products into bundles comprising the following steps:
a) providing an apparatus for packaging products into bundles comprising a conveying system for conveying the products and the bundles crossing, in the following order, a separation station for separating the products into a sequence of groups, a wrapping station for wrapping the groups in sequence in a continuous tube of pretensioned extensible plastic film, and a cutting station for cutting the continuous tube of pretensioned extensible plastic film to form bundles of said products wrapped in said plastic film;
b) inserting, preferably in an automated manner, downstream of said separation station, spacers into the space created by said separation station between a group of products and an adjoining group;
c) wrapping said groups of products in a pretensioned extensible plastic film in the form of a continuous tube;
d) cutting said continuous tube of pretensioned extensible plastic film between one group of products and the adjoining one in sequence, so that said pretensioned extensible plastic film partially closes onto the front and rear sides of the bundle;
e) optionally, recovering and recycling said spacers to said separation station.

Further features and advantages of the present invention will become more apparent from the description of some embodiments thereof, given below by way of non-limiting indication, with reference to the figures.

### Brief description of Figures

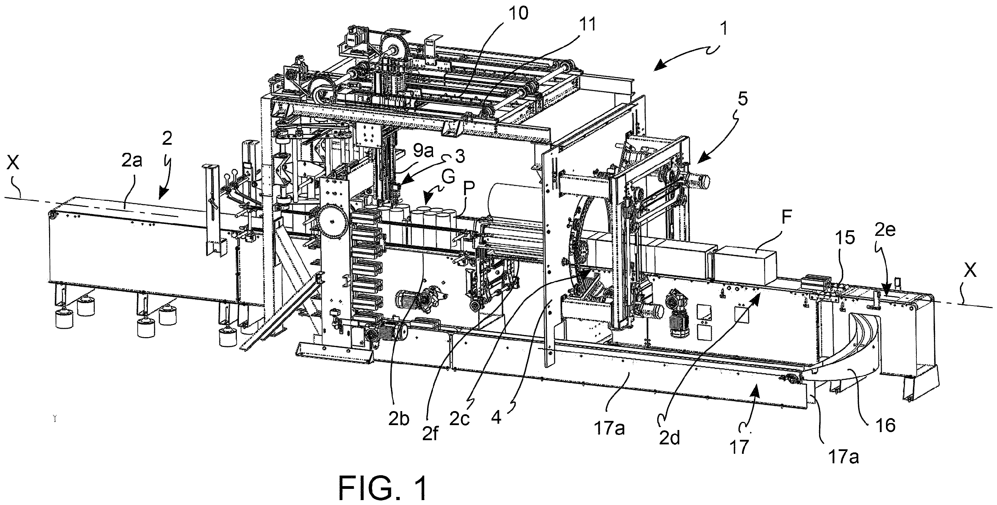

Figure 1 shows a perspective view of the apparatus of the invention;
Figure 2 shows a simplified top view of a detail of the apparatus in Figure 1;
Figure 3 shows a perspective view of a different detail of the apparatus in Figure 1;
Figure 4 shows a different perspective view of the detail in Figure 3;
Figure 5A shows a perspective view of the detail in Figure 4 from a different point of view, in particular from the opposite side of the apparatus;
Figure 5B shows a perspective view of the detail in Figure 4 from a different point of view;
Figure 6 shows a simplified side view of a different detail of the apparatus in Figure 1;
Figure 7 shows a simplified perspective view of the detail in Figure 6;
Figure 8 shows a simplified front view of the detail in Figure 6;

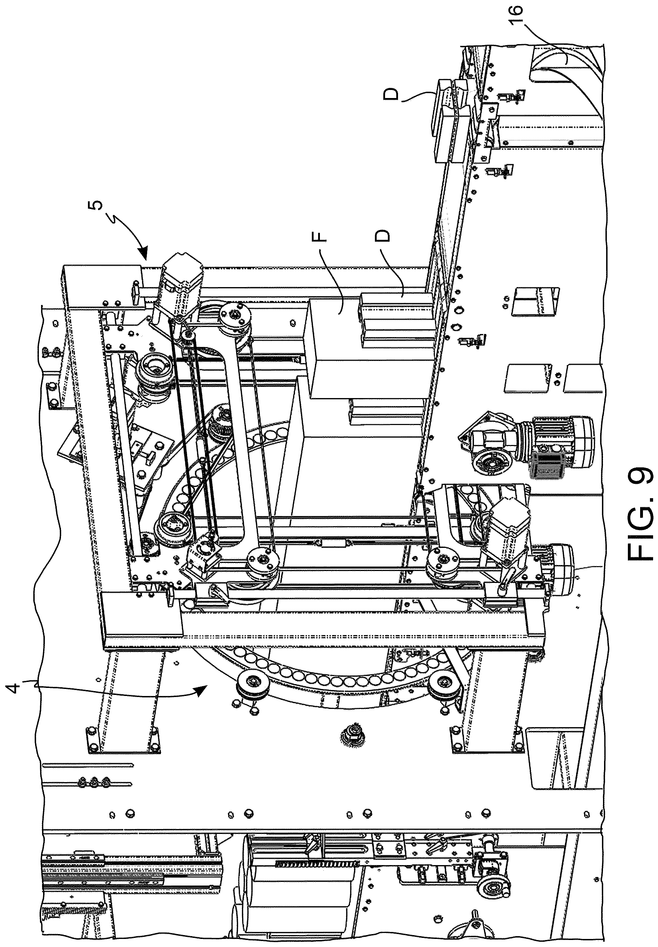

Figure 9 shows a perspective view of a different detail of the apparatus in Figure 1;

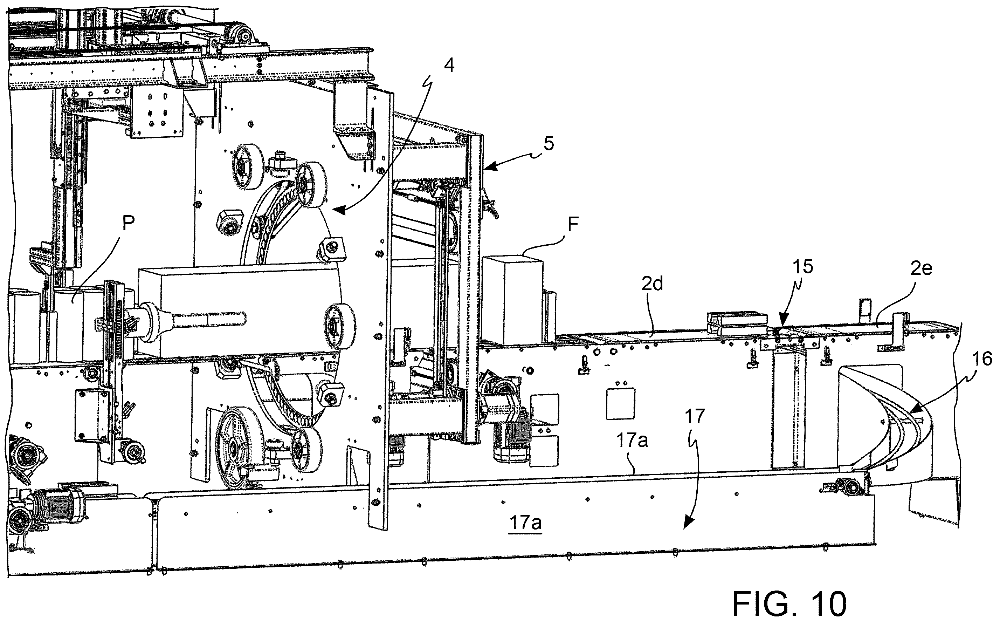

Figure 10 shows a perspective view of the detail in Figure 9 according to a different point of view;
Figure 11 shows a partial top perspective view of a detail of the apparatus of the invention;
Figures 12A and 12B show a perspective view and a top view of a spacer or godet, respectively.

### Detailed description of the invention

With reference to the figures, the apparatus for packaging products in bundles according to the invention, indicated by numeral 1 as a whole, comprises a conveying system 2 for the products P crossing in the following order
- a separation station 3 for separating the products P into a sequence of groups G,
- a wrapping station 4 for wrapping the groups G in sequence in a continuous tube of pretensioned extensible plastic film,
- a cutting station 5 for cutting the continuous tube of pretensioned extensible plastic film to form bundles F of said products P wrapped in said plastic film.

The conveying system 2 comprises a first section 2a to feed the products P to the separation station 3, a second section 2b to feed the groups G of products to the wrapping station 4, a third section 2c to feed the groups G of products P wrapped in the continuous tube of pretensioned extensible plastic film to the cutting station 5, a fourth section 2d to move the individual bundles F away from the cutting station 5, and a fifth section 2e to remove the bundles F from the apparatus 1. A stationary surface 2f is placed between the second section 2b and the third section 2c at the wrapping station 4, where the movement of the groups G of products P occurs by pushing, as will be described better below.

The first section 2a and the second section 2b of the conveying system 2 preferably consist of a continuous belt, moved at a first speed v1. The third, fourth and fifth sections 2c, 2d, 2e preferably consist of independent conveyor belts, where the third section 2c is moved at a speed v2 greater than v1, the fourth section 2d is moved at a speed v3 greater than v2, and the fifth section 2e is moved at a speed v4 greater than or equal to v3. Moreover, the first section 2a and the second section 2b comprise a belt with a low friction index, while the third, fourth and fifth sections 2c, 2d, 2e comprise a belt with a high friction index, in general a friction index greater than the friction index of the first and second sections 2a, 2b. This is due to the fact that, in the first and second sections 2a, 2b, the products P must be capable of sliding on the conveyor belt as will become clear below.

The products P, e.g., bottles or other types of containers, advance on the first section 2a of the conveying system 2 on one or more continuous lines aligned and placed side by side (in the figures, two continuous lines placed side by side) and are then fed to the separation station 3.

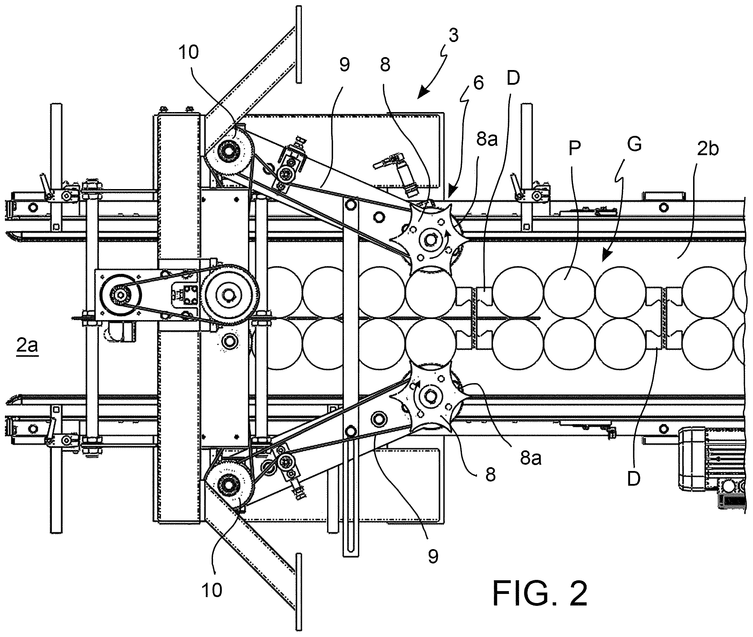

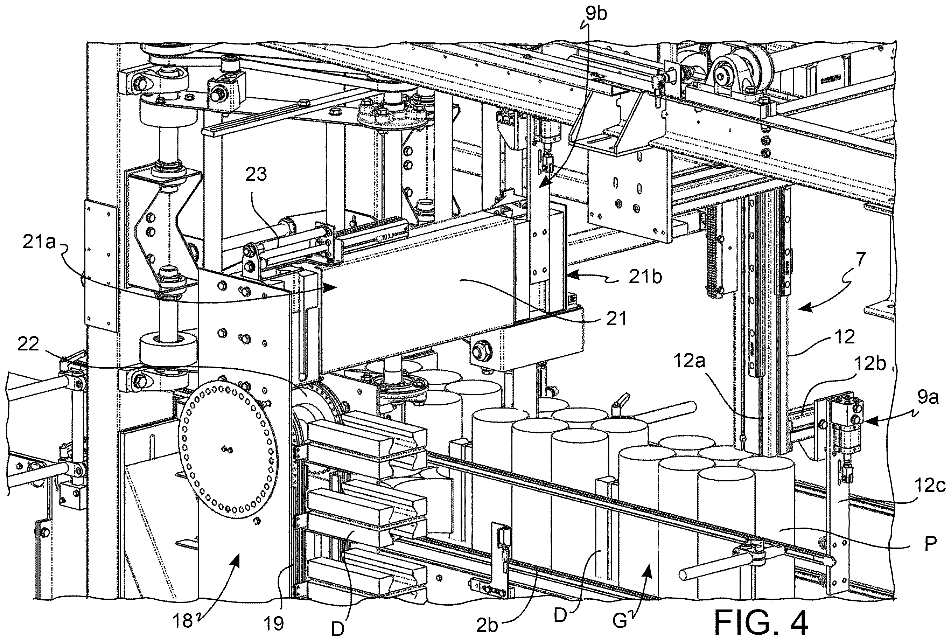

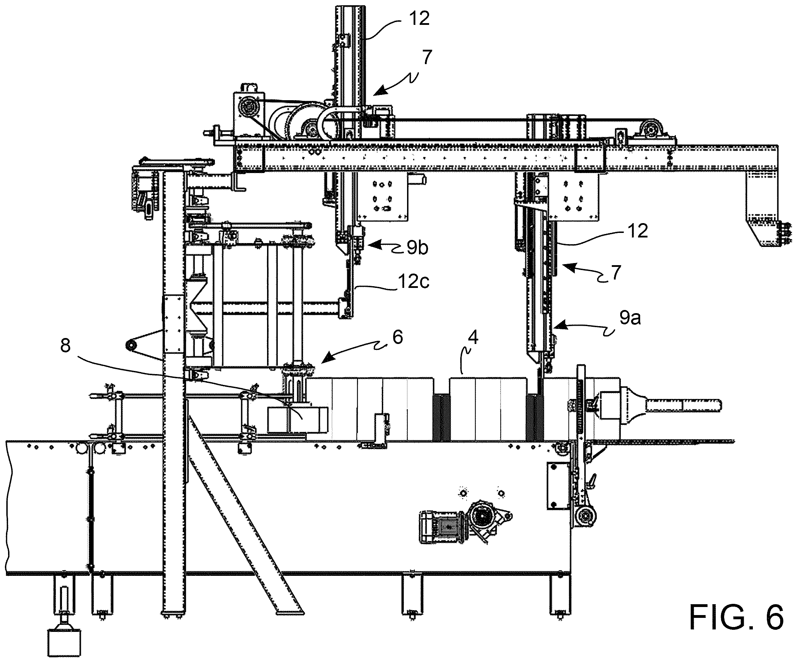

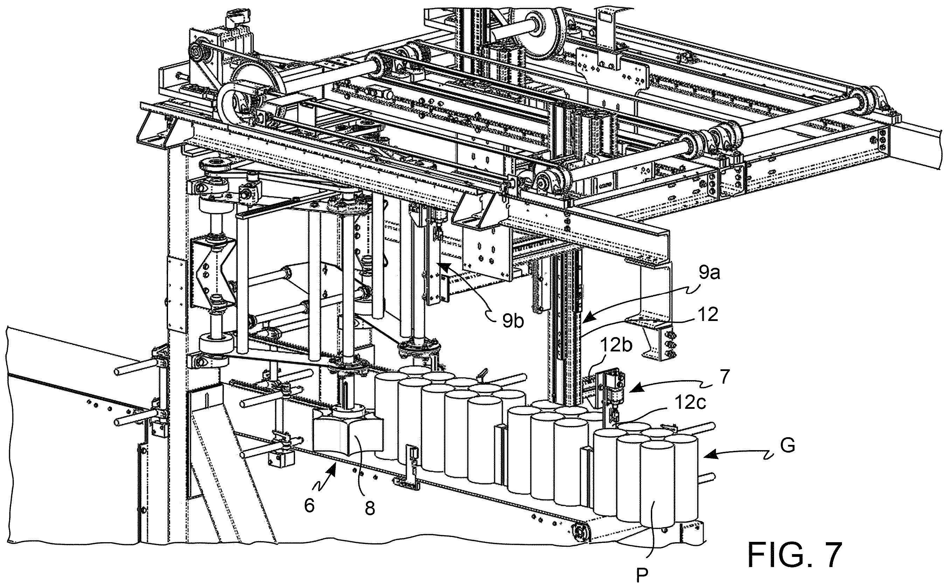

The separation station 3 comprises a spacing member 6 for spacing the products P to form groups G (shown in the plan view in Figure 2) and a stabilization member 7 for stabilizing the spacing between the groups G (shown in Figures 4-8).

The spacing member 6 comprises a pair of starwheels 8, arranged on opposite sides of the first section 2a of the conveying system 2 and each acting in a discontinuous and coordinated manner on a row of products P. The starwheels 8 are discontinuously motorized, for example through a chain transmission system 9 comprising motorized pulleys 10. The starwheels 8 comprise hollows 8a of suitable shape and size to be coupled to the products P and are moved in opposite direction, i.e., one clockwise and the other anticlockwise, as shown in Figure 2, so as to accompany the advancement of the products P. When a sufficient number of products P have transited on the rows such as to form the group G to be bundled (for example, three products per row to form a group G of six products P), the starwheels 8 interrupt their rotation: the group G of products thus continues to advance along the section 2a of the conveying system 2, while the products P upstream are held in a fixed position by the starwheels 8 until, once the desired separation has been obtained, the starwheels 8 resume their rotation to form a subsequent group G of products P. The retained products P must then be capable of sliding on the moving conveyor belt.

In the case of three or more continuous rows of products, the spacing member 6 comprises a tilting belt system of the type known in the art, to be integrated with the starwheel system 8.

The stabilization member 7 comprises at least a first gripper device 9a and at least a second gripper device 9b, the gripper devices 9a, 9b being movable with alternating motion parallel to the longitudinal axis X-X of the apparatus 1, i.e., along the advancement direction of the products P, on a guide 10 and, for example, by means of a pulley belt system 11.

Each of the gripper devices 9a, 9b comprises a vertical bar 12 vertically movable along a guide 13 from top to bottom and vice versa. The vertical bar 12 comprises a lower end 12a from which a horizontal extension 12b extends at a right angle, along a direction transverse to the longitudinal axis X-X, the horizontal extension 12b in turn comprising, at the distal end thereof, a vertical extension 12c extending downwards parallel to the vertical bar 12.

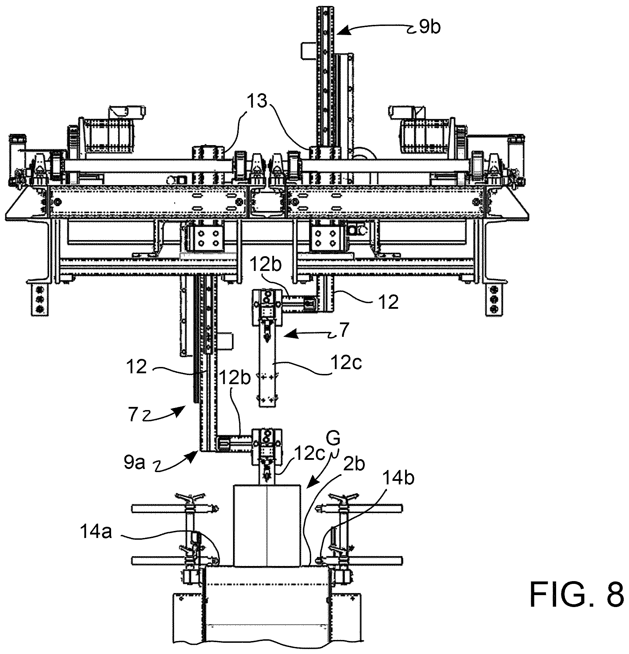

As shown in Figure 8, the gripper devices 9a, 9b slide along parallel straight lines above the side flanks 14a, 14b of the section 2b of the conveying system 2 and the horizontal extensions 12b of the respective vertical arms 12 extend in opposite directions - i.e., one to the left and the other to the right - over a length such that the respective vertical extensions 12c are aligned along the longitudinal axis X-X, in a substantially central position between the side flanks 14a, 14b of the section 2b of the conveying system 2.

The gripper devices 9a, 9b are adapted to pick up, move and release spacers D (also known as godets) which, as will be described below, are positioned by the gripper devices 9a, 9b, in the space between two adjacent groups G, which has been created immediately downstream of the starwheels 8.

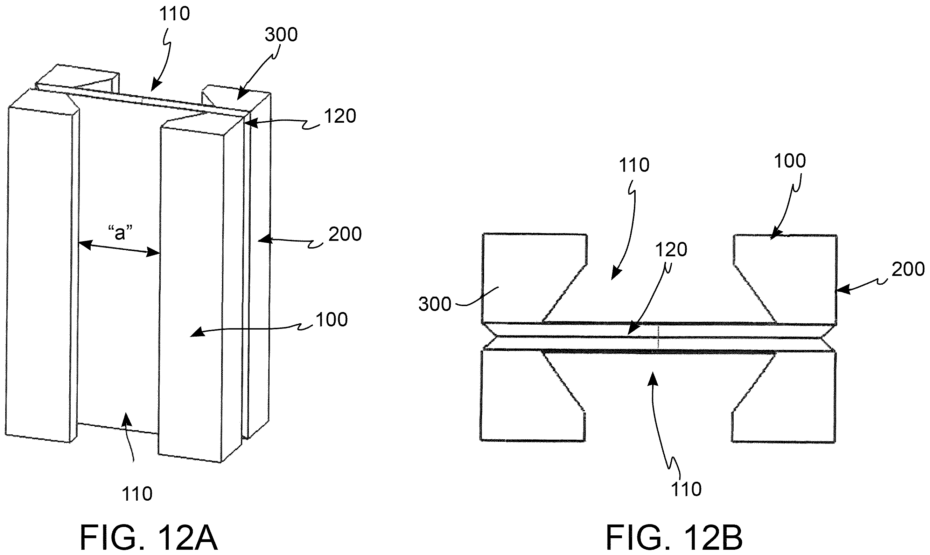

In an embodiment, the spacer D (shown in Figures 12A and 12B) consists of a parallelepiped having two major faces 100, two minor faces 200, and head surfaces 300, all substantially rectangular in shape. The major faces 100 comprise a dovetail-shaped hollow 110, having an opening with width "a" at the respective face 100. The spacer D can further comprise a peripheral groove 120 extending along the two minor faces 200 and the head surfaces 300.

The shape of the spacers D previously described was specifically designed for the embodiment of gripper devices 9a, 9b, which is to be understood as a non-limiting, exemplary embodiment. The peripheral groove 120 was also designed to allow a greater stroke for the cutting wires of the cutting station 5, which are advanced on the four sides of the tube of wrapping film. In other embodiments, the peripheral groove 120 could be omitted.

In the embodiment described above, the vertical extension 12c of the gripper devices 9a, 9b is in the shape of a plate with a smaller width than the width "a" of the opening of the hollow 110 of spacer D, so as to enter flat. In such an embodiment, the vertical extension 12c is associated with a lever member (not shown) which actuates pins which are caused to protrude laterally from the plate, thus allowing the spacer D to be retained by the gripper devices 9a, 9b. When such pins are returned to the retracted position, the spacer D can be released. However, it should be understood that the spacer gripping system described is only an example and therefore can be replaced by other gripping systems, e.g., a gripper with jaws, which can also require a different shape of the spacers D.

Downstream of the separation station 3, the second section 2b of the conveying system 2 is interrupted close to the stationary surface 2f, placed at the wrapping station 4. Downstream of the wrapping station 4, the third section 2c of the conveying system 2, which as mentioned moves at a speed v2 greater than the speed v1 of the first and second sections 2a, 2b, carries the bundles F, i.e., the groups G of products P on which the pretensioned extensible plastic film has been wrapped in the form of a continuous tube, at the cutting station 5, where the bundles F are individualized.

For brevity, the wrapping station 4 and the cutting station 5 will not be described herein since they are of a known type. An example of both is described in EP 3414167 to the same Applicant, while a different version of the cutting station is described in Italian patent application No. 102023000024615 of 21/11/2023 to the same Applicant.

In particular, in the latter patent application a cutting unit is described for separating one or more bundles F wrapped with a continuous film, comprising a load-bearing structure which operatively supports:
- two eccentric wheels, where said two eccentric wheels are hinged on opposite sides of the load-bearing structure and comprise an outer crown element and an eccentric central plate, the outer crown element being idly coupled to the eccentric central plate;
- a heated cutting wire having two ends, the cutting wire being fixed at the two ends onto said outer crown element by pins, at a first circumferential portion of said eccentric wheels;
- a tensioning wire having two ends and comprising an elastic compensation element along the length thereof, the tensioning wire being fixed at the two ends on said external crown element by means of pins, at a second circumferential portion of the eccentric wheels, so that a circumferential arc between the pins of the first circumferential portion and the pins of the second circumferential portion is less than 180° and preferably between 150° and 170°; where said eccentric central plate of said eccentric wheels is eccentrically fixed to a respective shaft, which in turn is fixed to a respective drive pulley, said drive pulleys being rotated continuously and synchronously so as to impart to said eccentric wheels an alternating motion component in a plane substantially perpendicular to a surface of said continuous film to be cut, between a position of engagement with said continuous film and a position of disengagement from said continuous film.

Although the cutting station described above is a preferred embodiment, it should be understood that those skilled in the art will be able to apply any cutting unit of known type to the apparatus 1 of the present invention.

The same applies to the wrapping station 4, whereby any type of ring wrapping unit known to those skilled in the art can be provided. The wrapping station 4 can comprise a pre-stretching member or merely a system for pretensioning the extensible film, for example by a speed gradient of the film feeding rollers.

Downstream of the cutting station 5, the bundles F, between which the spacers D are still arranged, are advanced up to the fourth section 2d of the conveying system 2, which as mentioned moves at a greater speed v3 than the speed v2 of the third section 2c. The bundles F are thus advanced more quickly, while the spacers D fall, due to the acceleration to which they are subjected, in a horizontal position (as shown in the figures), i.e., with a major face 100 resting on the conveyor belt.

A trap opening 15 is arranged between the fourth section 2d and the fifth section 2e of the conveying system 2, below which trap opening an arched chute 16 is placed, which leads into a manifold 17 comprising containment flanks 17a and a conveyor belt 17b, which can be placed at the bottom, so as to bring the recovered spacers D back to the separation station 3, from where they will be reused as will be described below.

The trap opening 15 comprises a central opening 15a, vertically aligned with the chute 16 and flanked on both sides by a series of idle rollers 15b which allow the advancing bundles F alternating with the spacers D to slide, without them getting stuck in the opening 15a.

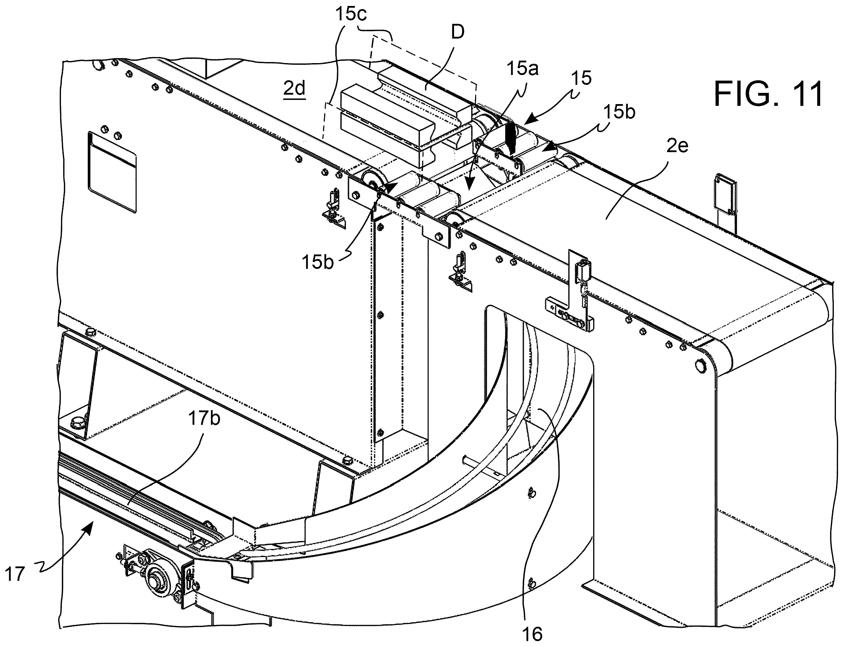

As shown with a dashed line in Figure 11, the end portion of the fourth section 2d of the conveying system 2 can comprise centering flanks 15c which direct the spacer D to be aligned with the opening 15a.

The recovery system of spacers D and the subsequent positioning thereof between the groups G of products P will now be described.

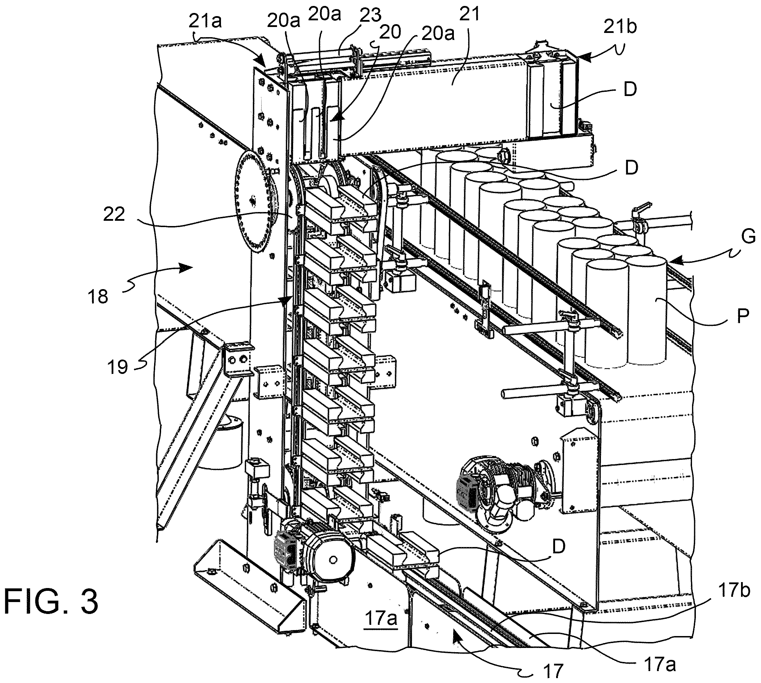

As shown in Figures 3, 4, 5A and 5B, the manifold 17 leads to a lifting device 18 comprising a chain elevator 19 which supports a plurality of plates 20. The lifting device 18 is substantially placed at the separation station 3 for separating the products P into groups G.

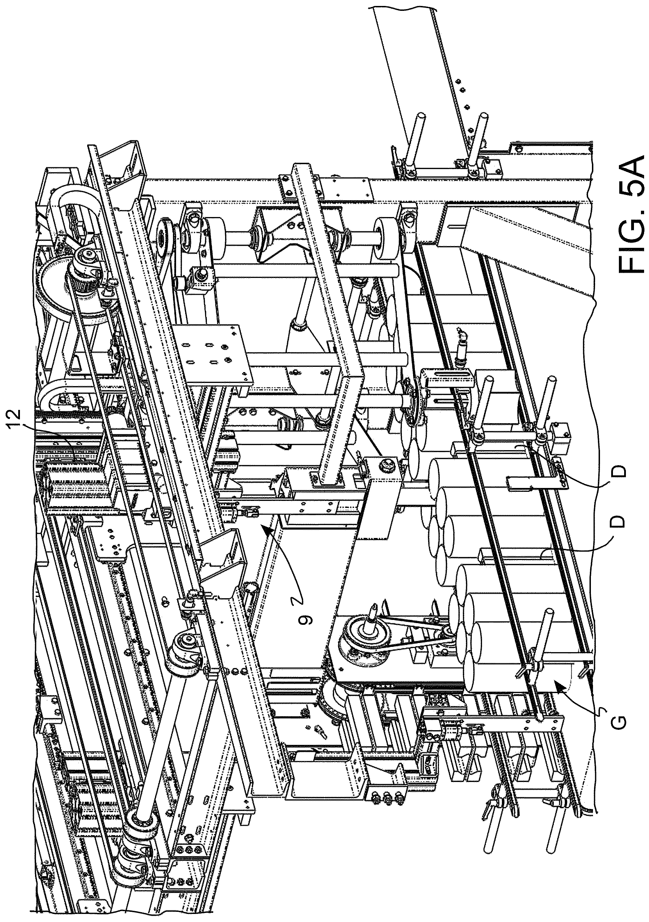

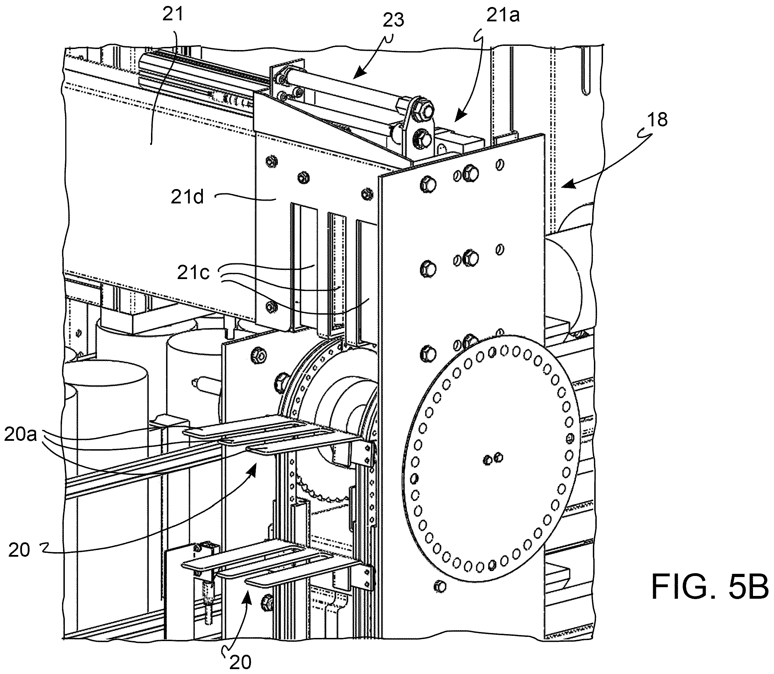

The plates 20 are shaped like fingers, e.g., three fingers 20a, and pick up the incoming spacers D from the manifold 17, raising them to the height of a tunnel element 21. Having reached the tunnel element 21, the plate 20 carrying a spacer D rotates around a pulley 22, switching from the horizontal position to the vertical position and thus housing the spacer D in the proximal end 21a of the tunnel 21. By means of a pusher (not shown), an actuator 23 pushes the spacer D to the distal end 21b. At the same time, the plate 20 continues its travel, passes through slots 21c of the opposite wall of the proximal end 21a, said slots having a complementary shape to that of the fingers 20a (Figure 5B), and following a rotation around a second pulley, returns to the position of gripping the spacers D at the manifold 17.

The spacer D brought to the distal end 21b of the tunnel element 21 is picked up by a gripper device 9a, 9b which, through a combined vertical-longitudinal movement, introduces it into the space formed by the starwheels 8 between groups G of products P. Following the positioning of the spacer D, the gripper device 9a, 9b continues its forward movement, thus contributing to the pushing advancement of the groups G of products P. Such a push is crucial for feeding the groups G of products onto the stationary surface 2f at the wrapping station 4 and then for moving it away from the wrapping station 4. However, it should be noted that such a pushing action, in certain embodiments, could be replaced by other movement systems, such as starwheels similar to the starwheels 8 previously described or high friction belts arranged on the free sides of the groups G to be moved, for example.

The gripper devices 9a, 9b act with alternating motion: while one inserts the spacer D and pushes the group G of products P, the other moves to the position for picking up a new spacer D from the tunnel element 21, and so on.

The operation of the apparatus 1 according to the invention is thus apparent in light of the preceding description.

The invention also relates to a method for packaging products into bundles comprising the following steps:
a) providing an apparatus for packaging products P into bundles F comprising a conveying system 2 for conveying the products P and the bundles F crossing, in the following order, a separation station 3 for separating the products P into a sequence of groups G, a wrapping station 4 for wrapping the groups G in sequence in a continuous tube of pretensioned extensible plastic film, and a cutting station 5 for cutting the continuous tube of pretensioned extensible plastic film to form bundles F of said products P wrapped in said plastic film;
b) inserting, preferably in an automated manner, downstream of said separation station 3, spacers D into the space created by said separation station 3 between a group G of products P and an adjoining group G;
c) wrapping said groups G of products P in a pretensioned extensible plastic film in the form of a continuous tube;
d) cutting said continuous tube of pretensioned extensible plastic film between one group G of products P and the adjoining one in sequence, so that said pretensioned extensible plastic film partially closes onto the front and rear sides of the bundle F;
e) optionally, recovering and recycling said spacers D to said separation station 3.

The pretensioned extensible plastic film is reclosed on the front and back sides of the bundle F due to the pretensioning of the film and the length of film that remains longitudinally before and after the transit of each bundle F, by virtue of the spacing of the bundles due to the spacers D. In fact, since the cutting occurs in a central position between two bundles F, the length of film available for reclosing is approximately half the length of the spacer D.

It is apparent that only some particular embodiments of the present invention have been described, to which those skilled in the art will be able to make all changes required to adapt it to particular applications, without departing from the scope of protection of the present invention.

## Claims

1. An apparatus (1) for packaging products (P) in bundles (F), comprising a conveying system (2) for the products (P), crossing in the following order
- a separation station (3) for separating the products (P) into a sequence of groups (G),
- a wrapping station (4) for wrapping the groups (G) in sequence in a continuous tube of pretensioned extensible plastic film,
- a cutting station (5) for cutting the continuous tube of pretensioned extensible plastic film to form bundles (F) of said products (P) wrapped in said pretensioned extensible plastic film,
**characterized in that** the separation station (3) comprises a spacing member (6) for spacing out the products (P) to form said groups (G) and a stabilization member (7) for stabilizing the spacing between the groups (G) comprising at least a first gripper device (9a) and at least a second gripper device (9b), said gripper devices (9a, 9b) being configured to move and insert spacers (D) into the space formed by said spacing member (6) between two groups (G) of products (P).

2. The apparatus (1) according to claim 1, wherein the conveying system (2) comprises a first section (2a) to feed the products (P) to the separation station (3), a second section (2b) to feed the groups (G) of products to the wrapping station (4), a third section (2c) to feed the groups (G) of products (P) wrapped in the continuous tube of film to the cutting station (5), a fourth section (2d) to move the individual bundles (F) away from the cutting station (5), and a fifth section (2e) to remove the bundles (F) from the apparatus (1), wherein between the second section (2b) and the third section (2c), a stationary surface (2f) is placed at the wrapping station (4), where the movement of the groups (G) of products (P) occurs by pushing.

3. The apparatus (1) according to claim 2, wherein the first section (2a) and the second section (2b) of the conveying system (2) consist of a continuous belt, moved at a first speed v1, the third, fourth and fifth sections (2c, 2d, 2e) consist of independent conveyor belts, wherein the third section (2c) is moved at a speed v2 greater than v1, the fourth section (2d) is moved at a speed v3 greater than v2, and the fifth section (2e) is moved at a speed v4 greater than or equal to v3, and wherein, preferably, the first section (2a) and the second section (2b) comprise a belt with a low friction index, whereas the third, fourth and fifth sections (2c, 2d, 2e) comprise a belt with a high friction index, having a greater friction index than the friction index of the first and second sections (2a, 2b) .

4. The apparatus (1) according to any one of claims 2 to 3, wherein the spacing member (6) comprises a pair of starwheels (8), arranged on opposite sides of the first section (2a) of the conveying system (2) and each acting in a discontinuous and coordinated manner on a row of products (P), wherein the starwheels (8) comprise hollows (8a) of suitable shape and size to be coupled to the products (P) and are moved in opposite directions, i.e., one clockwise and the other anticlockwise, so as to accompany the advancement of the products (P) .

5. The apparatus (1) according to any one of claims 1 to 4, wherein the gripper devices (9a, 9b) are movable with alternating motion parallel to a longitudinal axis (X-X) of the apparatus (1), i.e., along the advancement direction of the products (P).

6. The apparatus (1) according to claim 5, wherein each of the gripper devices (9a, 9b) comprises a vertical bar (12) vertically movable along a guide (13) from the top downwards and vice versa, the vertical bar (12) comprising a lower end (12a) from which, along a direction transverse to the longitudinal axis (X-X), a horizontal extension (12b) extends at a right angle, in turn comprising, at the distal end thereof, a vertical extension (12c) extending downwards parallel to the vertical bar (12), wherein the gripper devices (9a, 9b) slide along straight lines above the side flanks (14a, 14b) of the conveying system (2) and the horizontal extensions (12b) of the respective vertical arms (12) extend in opposite directions, i.e., one to the left and the other to the right, over a length such that the respective vertical extensions (12c) are aligned along the longitudinal axis (X-X), in a substantially central position between the side flanks (14a, 14b) of the conveying system (2).

7. The apparatus (1) according to any one of claims 2 to 6, wherein a trap opening (15) is arranged between the fourth section (2d) and the fifth section (2e) of the conveying system (2), below which trap opening (15) an arched chute (16) is placed, which leads into a manifold (17) comprising a conveyor belt (17b), so as to bring the spacers (D) recovered for reuse back to the separation station (3) .

8. The apparatus (1) according to claim 7, wherein the trap opening (15) comprises a central opening (15a), vertically aligned with the chute (16) and flanked on both sides by a series of idle rollers (15b) which allow the sliding movement of the advancing bundles (F) alternating with the spacers (D) .

9. The apparatus (1) according to any one of claims 1 to 8, comprising, at the spacing member (6), a lifting device (18) and a tunnel element (21), configured to lift and bring the spacers (D) to a position of gripping by the gripper devices (9a, 9b).

10. The apparatus (1) according to claim 9, wherein the lifting device (18) comprises a plurality of plates (20) configured to lift the spacers (D) to the height of said tunnel element (21).

11. The apparatus (1) according to claim 10, wherein the plates (20) are shaped like fingers (20a) and are configured to pick up the incoming spacers (D) from the manifold (17) and deposit them in a proximal end (21a) of the tunnel element (21) by rotation about a pulley (22), so as to move from the horizontal position to the vertical position; and wherein the tunnel element (21) comprises an actuator (23) configured to push the spacer (D) to a distal end (21b) of the tunnel element (21), at said position of gripping by the gripper devices (9a, 9b).

12. The apparatus (1) according to any one of claims 2 to 11, wherein the gripper devices (9a, 9b) are configured to act with alternating motion so that, while one inserts a spacer (D) and pushes a group (G) of products (P) towards the stationary surface (2f), the other moves to the gripping position of a spacer (D) from the tunnel element (21), and so on.

13. A method for packaging products (P) into bundles (F) comprising the following steps:
a) providing an apparatus for packaging products (P) into bundles (F) comprising a conveying system (2) for conveying the products (P) and the bundles (F) crossing, in the following order, a separation station (3) for separating the products (P) into a sequence of groups (G), a wrapping station (4) for wrapping the groups (G) in sequence in a continuous tube of pretensioned extensible plastic film, and a cutting station (5) for cutting the continuous tube of pretensioned extensible plastic film to form bundles (F) of said products (P) wrapped in said plastic film;
b) inserting, preferably in an automated manner, downstream of said separation station (3), spacers (D) into the space created by said separation station (3) between a group (G) of products (P) and an adjoining group (G);
c) wrapping said groups (G) of products (P) in a pretensioned extensible plastic film in the form of a continuous tube;
d) cutting said continuous tube of pretensioned extensible plastic film between one group (G) of products (P) and the adjoining one in sequence, so that said pretensioned extensible plastic film partially closes onto the front and rear sides of the bundle (F);
e) optionally, recovering and recycling said spacers (D) to said separation station (3).
